# EUROPÄISCHE PATENTSCHRIFT

(11) **EP 2 723 909 B1**
(45) Veröffentlichungstag und Bekanntmachung des Hinweises auf die Patenterteilung: **04.01.2017**
(21) Anmeldenummer: 12726794.6
(22) Anmeldetag: 08.06.2012
(51) Int. Cl.: B23K 103/08, B23K 103/10, B23K 26/32, B23K 31/02, B23K 35/28, B62D 25/04, C22C 21/10, C22F 1/053

(54) **FAHRZEUGBAUTEIL UND VERFAHREN ZU SEINER HERSTELLUNG**
VEHICLE COMPONENT AND METHOD FOR PRODUCING SAME
ÉLÉMENT STRUCTURAL DE VÉHICULE ET SON PROCÉDÉ DE FABRICATION

(30) Priorität: 24.06.2011 DE 102011078032
(43) Veröffentlichungstag der Anmeldung: 30.04.2014
(73) Patentinhaber: Aleris Rolled Products Germany GmbH, 56070 Koblenz (DE)
(72) Erfinder: BRAUNSCHWEIG, Wolfgang, 56203 Höhr Grenzhausen (DE)
(74) Vertreter: Müller Schupfner & Partner Patent- und Rechtsanwaltspartnerschaft mbB
(86) Internationale Anmeldenummer: PCT/EP2012/060886
(87) Internationale Veröffentlichungsnummer: WO 2012/175347

(56) Entgegenhaltungen:
- WO-A1-02/052053
- WO-A1-2010/142579
- US-A1- 2007 151 636
- US-A1- 2008 283 163
- US-A1- 2010 037 998

## Beschreibung

Die Erfindung betrifft ein Fahrzeugbauteil, insbesondere ein Kraftwagenbauteil aus zwei miteinander verschweißten Aluminiumlegierungen, insbesondere eine B-Säule, sowie ein Verfahren zu dessen Herstellung.

### Stand der Technik

Tragende Fahrzeugsäulen von Kraftfahrzeugen, verbinden den Dachbereich (Dach und innere Seitenteile) eines Kraftfahrzeugs mit dem Karosserieunterbau. Den Säulen kommt im Falle eines Unfalls mit Überschlagen des Wagens die lebenserhaltende Aufgabe zu, die Fahrgastzelle gegen vertikale Verformung zu stabilisieren. Weiterhin dienen sie der Aufnahme von Kräften beim Seitenaufprall, damit die Fahrzeuginsassen unversehrt bleiben.

Die tragenden Fahrzeugsäulen werden mit von vorn nach hinten fortlaufenden Buchstaben bezeichnet. Die B-Säule ist beispielsweise die Verbindung zwischen Fahrzeugboden und Fahrzeugdach in der Mitte der Fahrgastzelle. Im Karosseriebau ist derzeit der Einsatz borlegierter pressgehärter Vergütungsstähle (z.B. 22MnB5) in der B-Säule üblich. Dabei wird der obere Teil der Säule auf Festigkeit ausgelegt um ein Eindringen der B-Säule in den Innenraum zu verhindern, während im unteren Teil deutlich geringere Festigkeiten vorzufinden sind, dafür aber höhere Anforderungen an die Duktilität gestellt werden. Dies wird durch partielles Vergüten im unteren Teil der Säule erzielt. Die vorzufindenden Materialeigenschaften ermöglichen es, die Energie, die durch den Seitenaufprall in die B-Säule eingeleitet wird, durch Umformarbeit im unteren Teil abzubauen und im oberen Teil der Säule standzuhalten.

Im Zuge moderner Leichtbaubestrebungen werden Kraftwagenkarosserien und Verkleidungsteile zunehmend aus Leichtmetallen, insbesondere aus Aluminiumbasislegierungen gefertigt. Um die notwendige strukturelle Stabilität des Kraftwagens zu gewährleisten, wird hierbei der Einsatz von hoch- oder höherfesten Legierungen, insbesondere von Aluminiumlegierungen der Legierungsklasse AA 7xxx, bevorzugt. Derartige Legierungen haben eine besonders gute Festigkeit, und verleihen einem Kraftwagen aus derartigen Metallen die notwendige statische und dynamische Stabilität. Nachteiligerweise sind derartige Legierungen nur wenig duktil und damit schlecht umformbar. Dies macht die Fertigung derartiger Kraftwagenbauteile aufwändig, da beispielsweise beim Tiefziehen aufgrund der geringen Duktilität eine hohe Anzahl von Ziehschritten notwendig ist. Auch das Crashverhalten eines Kraftwagens mit solchen Bauteilen ist aufgrund der geringen Duktilität und Umformbarkeit oftmals nicht optimal, da im Falle einer unfallbedingten Kraftbeaufschlagung aufgrund der geringen Umformung der Bauteile nur sehr wenig Energie absorbiert wird.

Der vorliegenden Erfindung liegt daher die Aufgabe zugrunde, ein Fahrzeugbauteil, insbesondere eine B-Säule, bereitzustellen, welches die Herstellung von Kraftwagen aus hoch- bzw. höherfesten Aluminiumlegierungen bei gleichzeitig guten Crasheigenschaften ermöglicht. Weiterhin hat die vorliegende Erfindung die Aufgabe, ein Verfahren zur Herstellung eines solchen Fahrzeugbauteils bereitzustellen.

### Beschreibung der Erfindung

Diese Aufgabe wird durch ein Verfahren gelöst, welches die folgenden Schritte umfasst:
a) Bereitstellen einer ersten Aluminiumlegierung; wobei es sich bei der ersten Aluminiumlegierung um eine Aluminiumlegierung der Klasse AA7xxx handelt :
b) Durchführen einer Wärmebehandlung der ersten Aluminiumlegierung zum Erhöhen der Duktilität der ersten Aluminiumlegierung;
c) Bereitstellen einer zweiten Aluminiumlegierung, deren Zusammensetzung im Wesentlichen jener der ersten Aluminiumlegierung entspricht;
wobei es sich bei der zweiten Aluminiumleqierunq um eine Aluminiumleqierunq der Klasse AA7xxx handelt :
d) Durchführen einer Wärmebehandlung der zweiten Aluminiumlegierung, wobei sich die Wärmebehandlung der ersten Aluminiumlegierung von der Wärmebehandlung der zweiten Aluminiumlegierung unterscheidet;
e) Zusammenschweißen der wärmebehandelten ersten Aluminiumlegierung und der wärmebehandelten zweiten Aluminiumlegierung, um ein Verbundteil zu erhalten; und
f) Umformen des Verbundteils zu einem Kraftwagenbauteil, wobei das Kraftwaqenbauteil (20) steife Bereiche und deformierbare Bereiche aufweist ;
g) Kathodische Tauchlackierung und/oder Lackierdurchlauf des Kraftwagenbauteils (20).

Unter einer Aluminiumlegierung wird erfindungsgemäß eine Legierung verstanden, bei deren Hauptbestandteil es sich um Aluminium handelt. Unter der zweiten Aluminiumlegierung, deren Zusammensetzung im Wesentlichen jener der ersten Aluminiumlegierung entspricht wird insbesondere eine Aluminiumlegierung verstanden, deren chemische Zusammensetzung sich hinsichtlich jeder ihrer Komponenten maximal um 0,5 Gew.-% von der Zusammensetzung der ersten Aluminiumlegierung unterscheidet.

Bei dem erfindungsgemäßen Verfahren zum Herstellen eines Kraftwagenbauteils wird zumindest der Teilbereich des Kraftwagenbauteils einer Wärmebehandlung (Temper) zum Erhöhen der Duktilität unterzogen, welcher aus der ersten Aluminiumlegierung besteht. Hierdurch kann sowohl die gewünschte Umformbarkeit bei der Herstellung des Bauteils sichergestellt werden, als auch die Crasheigenschaften des Bauteils verbessert werden. Durch die erhöhte Duktilität wird ein höherer Verformungsgrad im Crashfall erzielt, sodass das Bauteil mehr Energie absorbieren kann.

Erfindungsgemäß werden auf die erste Aluminiumlegierung und auf die zweite Aluminiumlegierung unterschiedliche Wärmebehandlungen angewandt, wobei die Wärmebehandlungen bevorzugt zu T6- bzw. T7-Härtegraden führen. Hierdurch können die mechanischen Eigenschaften des Bauteils lokal optimiert werden, sodass beispielsweise eine B-Säule eine besonders duktile Soll-Verformungszone und eine besonders steife Sicherheitszone aufweisen kann. Die Lage der einzelnen Zonen kann dabei jeweils nach den gewünschten Crasheigenschaften des Bauteils eingestellt werden, sodass insgesamt mit solchen Bauteilen ein Kraftwagen geschaffen werden kann, der sowohl ein geringes Gesamtgewicht, als auch eine besonders steife und damit stabile Sicherheitszelle in Kombination mit besonders gut umformbaren und damit energieabsorbierenden Knautschzonen aufweist. Daher ist es bevorzugt, dass die Wärmebehandlung der zweiten Aluminiumlegierung nicht der Erhöhung der Duktilität sondern der Erhöhung der Festigkeit dient.

Die beiden Wärmebehandlungen werden vor dem Umformen des Kraftwagenbauteils durchgeführt. Hierdurch wird das Umformen erleichtert, beim Tiefziehen kann beispielsweise auf eine hohe Zahl von Tiefziehschritten verzichtet werden.

Das Zusammenschweißen der beiden Aluminiumlegierungen erfolgt bevorzugt durch Rührreibschweißen (engl: Friction Stir Welding, FSW) oder Laserstrahlschweißen.

Das Umformen des Verbundteils zu einem Kraftwagenbauteil erfolgt unter Verwendung bekannter Verfahren, welche auch für herkömmliche Kraftwagenbauteile verwendet werden. Wenn es sich bei dem erfindungsgemäßen Kraftwagenbauteil um eine B-Säule handelt, kann diese beispielsweise ausgehend von einem Verbundteil in Form eines flachen zugeschnittenen Rohlings hergestellt werden. Dieser Rohling wird derart geschnitten, dass er in Form eines Rechtecks und eines Trapezes vorliegt, die gegeneinander gesetzt werden. Auf diese Weise wird ein trompetenförmiger Rohrabschnitt erhalten, aus dem die B-Säule beispielsweise durch Hydroformen hergestellt wird, d. h. die Wand des Rohrabschnitts wird unter dem Einfluss von Wasserdruck gegen ein geformtes Teil oder einen Stempel gepresst.

Es ist zweckmäßig, erfindungsgemäß als erste Aluminiumlegierung und als zweite Aluminiumlegierung jeweils eine hochfeste oder höherfeste Legierung, insbesondere eine Aluminiumlegierung der Klasse AA 7xxx, zu verwenden (die Bezeichnung von Aluminiumlegierungen erfolgt hierbei mit einer Registriernummer der Aluminium Association (AA) unter "International Alloy Designations and Chemical Composition Limits for Wrought Aluminum and Wrought Aluminum Alloys"). Solche Legierungen weisen im nicht wärmebehandelten Zustand eine besonders hohe Steifigkeit auf, sodass ein Kraftwagen aus derartigen Bauteilen die notwendige statische und dynamische Steifigkeit besitzt, wobei durch die Wärmebehandlung gleichzeitig eine gute Verarbeitbarkeit des Materials und ein gutes Crashverhalten sichergestellt wird. Mit diesen Legierungen sind bei einer Dehnung von ca. 8 bis 10 % Festigkeiten von Rp_{0,2} > 500 MPa erreichbar.

In einer bevorzugten Ausführungsform handelt es sich bei den beiden Aluminiumlegierungen der Klasse AA 7xxx, besonders bevorzugt um Aluminiumlegierungen, die ausgewählt sind aus der Gruppe, bestehend aus den Legierungen der Klassen AA 7055, AA7081, AA 7181, AA 7085, AA 7185.

In einer bevorzugten Ausführungsform handelt es sich bei den beiden Aluminiumlegierungen der Klasse AA 7xxx um Aluminiumlegierungen, die unabhängig voneinander die folgende chemischen Zusammensetzung in Gew.-% aufweisen:

| | |
|---|---|
| Zn: | 6,9 - 8,4, insbesondere 6,9 - 7,8 |
| Mg: | 1,2 - 2,4, insbesondere 1,4 - 2,1 |
| Cu: | 1,3-2,6 |
| Mn: | < 0,3 |
| Cr oder Zr: | 0,05-0,25 |
| Si: | < 0,3, insbesondere 0,1 - 0,25 |
| Fe: | < 0,35, insbesondere 0,1 - 0,25 |
| Ti: | < 0,1 |
| andere Elemente: | jeweils < 0,05, insgesamt < 0,2 |

| | |
|---|---|
| Rest: | Aluminium |

Besonders bevorzugt enthält die Aluminiumlegierung 0,04 - 0,25 Gew.-%, insbesondere 0,07 - 0,18 Gew.-%, Zirkonium. Weiterhin ist es besonders bevorzugt, dass die Aluminiumlegierung jeweils 1,4 - 1,8 Gew.-% Kupfer enthält. Diese Aluminiumlegierungen zeigen Festigkeiten von Rp_{0,2} > 500 MPa, insbesondere mehr als 530 MPa. Bevorzugte Stärken des Blechs liegen zwischen 0.5 und 3.5 mm.

Es ist bekannt, dass Aluminiumlegierungen der Klasse 7xxx bis zu 0,05 Gew.-% Ca, bis zu 0,05 Gew.-% Sr und bis zu 0,004 Gew.-% Be enthalten können. Beryllium wird traditionell als Antioxidationsmittel verwendet und kann auch den erfindungsgemäß verwendeten Aluminiumlegierungen zugesetzt werden. Allerdings ist Beryllium hochgradig toxisch. Aus Gründen von Umwelt- und Gesundheitsschutz ist es deshalb bevorzugt, dass die erfindungsgemäß verwendeten Aluminiumlegierungen im Wesentlichen frei von Beryllium sind. Geringe Mengen an Calcium oder Strontium können den Aluminiumlegierungen allein oder in Mischung zugesetzt werden, um dieselbe Funktion zu erfüllen, wie Beryllium. Bevorzugt enthalten die beiden Aluminiumlegierungen jeweils 10 bis 100 ppm Calcium.

Die Erfindung betrifft ferner ein Kraftwagenbauteil, insbesondere eine B-Säule, welches gemäß dem erfindungsgemäßen Verfahren herstellbar ist. Wie bereits geschildert, kann durch die beiden unterschiedlichen Wärmebehandlungen der Bauteilkomponenten eine lokale Optimierung der Materialeigenschaften erzielt werden. Besonders zweckmäßig ist es dabei, den Teilbereich des Kraftwagenbauteils, welcher aus der ersten Aluminiumlegierung besteht, als Solldeformationsbereich bei einer unfallbedingten Kraftbeaufschlagung auszubilden, um so eine besonders gute Kombination aus steifen Bereichen, die beispielsweise eine Sicherheitszelle bilden, und deformierbaren Bereichen, die eine Knautschzone zur Energieabsorption bilden, zu schaffen.

Durch den Einsatz der erfindungsgemäß verwendeten Aluminiumlegierungen bietet das erfindungsgemäße Kraftwagenbauteil gegenüber einer Stahllösung ein Gewichtspotential von etwa 40 %. Wenn es sich bei dem Kraftwagenbauteil um eine B-Säule handelt entspricht dies einer Gewichtseinsparung von 10 bis 13 kg pro Fahrzeug.

Um die verschiedenen Anforderungen an das Kraftwagenbauteil zu erfüllen, greift die Erfindung auf unterschiedliche Temper (Alterungszustände) bei den beiden Aluminiumlegierungen zurück. Dabei werden die Materialeigenschaften in der Ausgangsplatine so optimiert dass nach Umformen, insbesondere W-Temper Umformen, und anschließender kathodischer Tauchlackierung (KTL) und/oder Lackierdurchlauf die erforderlichen Eigenschaften im Bauteil vorliegen.

### Kurze Beschreibung der Zeichnungen

Im Folgenden werden die Erfindung und ihre Ausführungsformen anhand der Zeichnungen näher erläutert, ohne sie dabei einzuschränken.
Figur 1 zeigt eine schematische Darstellung des erfindungsgemäßen Verfahrens.
Figur 2 stellt schematisch die Umwandlung eines erfindungsgemäßen Verbundteils zu einer B-Säule dar.

### Beschreibung einer bevorzugten Ausführungsform

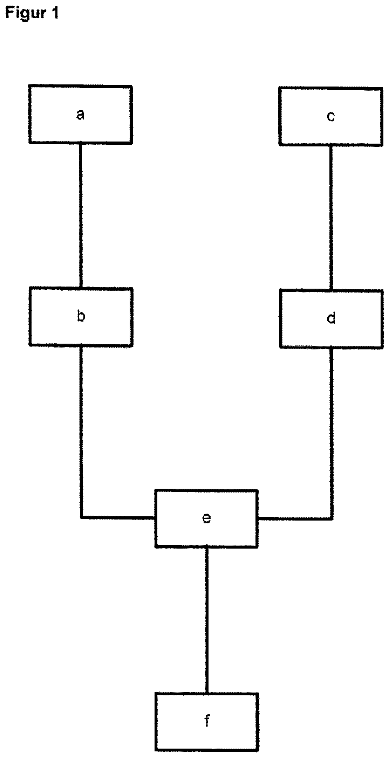

Figur 1 stellt schematisch den Ablauf des erfindungsgemäßen Verfahrens dar. In einer Ausführungsform wird in Schritt a) eine Platine aus einer Legierung der Klasse AA 7081 als erste Aluminiumlegierung bereitgestellt. Zum Erhöhen der Duktilität der ersten Aluminiumlegierung wird in Schritt b) eine T6 oder T7-Wärmebehandlung, bevorzugt aus der Gruppe der T73, T74, T76, T77, T78 oder T79-Wärmebehandlungen, besonders bevorzugt eine T73-Wärmebehandlung der ersten Aluminiumlegierung durchgeführt. Als zweite Aluminiumlegierung wird in Schritt c) eine Platine aus einer Legierung bereitgestellt, welche ebenfalls der Klasse AA 7081 angehört. Zum Erhöhen der Festigkeit der zweiten Aluminiumlegierung wird in Schritt d) eine weitere T6 oder T7-Wärmebehandlung, bevorzugt aus der Gruppe der T73, T74, T76, T77, T78 oder T79-Wärmebehandlungen, der zweiten Aluminiumlegierung durchgeführt, allerdings weicht diese von der Wärmebehandlung der ersten Aluminiumlegierung ab, ist also bevorzugt z.B. eine T76-Wärmebehandlung, wenn die Wärmebehandlung der ersten Aluminiumlegierung eine T73-Wärmebehandlung war oder umgekehrt. Anschließend werden in Schritt e) die wärmebehandelte ersten Aluminiumlegierung und die wärmebehandelte zweiten Aluminiumlegierung mittels Rührreibschweißen (FSW) zusammengeschweißt, um ein Verbundteil zu erhalten. Das Verbundteil wird in Schritt f) zu einem trompetenförmigen Rohrabschnitt geformt, aus dem durch Hydroformen eine B-Säule hergestellt wird.

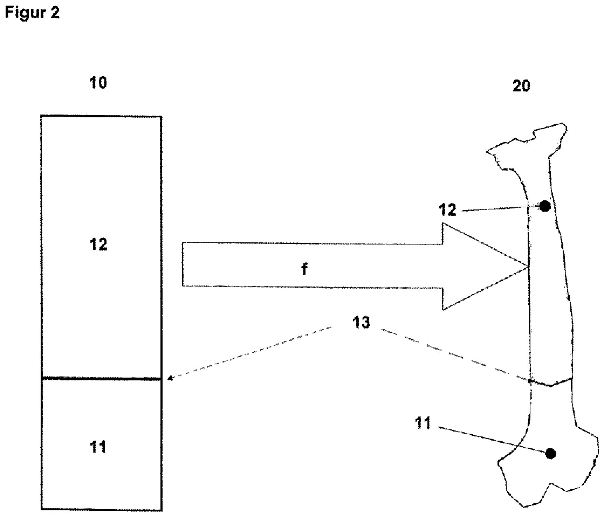

Figur 2 stellt detailliert die erfindungsgemäße Umformung des Verbundteils zu einer B-Säule dar. Das Verbundteil 10 in Form einer Platine besteht aus der ersten Aluminiumlegierung 11 und aus der zweiten Aluminiumlegierung 12. Die beiden Aluminiumlegierungen wurden bereits in den Verfahrensschritten b) und d) wärmebehandelt und sie wurden in Verfahrensschritt e) mittels einer Schweißnaht 13 miteinander verbunden. Die Umformung f) zu einem Kraftwagenbauteil 20 in Form einer B-Säule erfolgt mittels Hydroformens. Durch die erhöhte Duktilität des Teilbereiches aus der ersten Aluminiumlegierung 11, erhält dieser im Falle einer unfallbedingten Kraftbeaufschlagung besonders gute Verformungseigenschaften. Der Bereich aus der ersten Aluminiumlegierung 11 ist damit als Solldeformationszone ausgebildet, die sich beim Crash verformen kann und daher eine hohe Energiemenge absorbiert. Der Teilbereich aus der zweiten Aluminiumlegierung 12 weist hingegen eine hohe Steifigkeit auf. Bei einer unfallbedingten Kraftbeaufschlagung erfolgt in diesem Teilbereich der B-Säule daher keine nennenswerte Deformation. Dieser steife Teilbereich trägt somit zur Sicherheit der Fahrgastzelle bei.

Neben der gezeigten B-Säule kann das geschilderte Verfahren selbstverständlich auch für weitere Kraftwagenbauteile Anwendung finden. Infrage kommen insbesondere Motorhaubeninnenteile, Kraftwagentunnel, alle vorderen Längsträger, die Seitenschweller, Seitenaufprallschutzteile, Stoßfängerbiegeträger, Sitzquerträger, Dachrahmen, Dachquerspriegel, Rückwandquerträger, Instrumententafelquerträger und die Rückwand selbst.

Insgesamt kann unter Verwendung solcher Teile ein Kraftwagen geschaffen werden, der aufgrund der Verwendung von Aluminium besonders leicht ist, gleichzeitig aber auch eine lokal optimierte Kombination von Duktilität - und damit einer Energieabsorption im Crashfall - und Steifigkeit aufweist.

### BEZUGSZEICHENLISTE

- 10:: Verbundteil
- 11:: erste Aluminiumlegierung
- 12:: zweite Aluminiumlegierung
- 13:: Schweißnaht

- 20:: Fahrzeugbauteil

## Patentansprüche

1. Verfahren zum Herstellen eines Fahrzeugbauteils, insbesondere eines Kraftwagenbauteils (20), umfassend die folgenden Schritte:
a) Bereitstellen einer ersten Aluminiumlegierung (11), wobei es sich bei der ersten Aluminiumlegierung um eine Aluminiumlegierung der Klasse AA7xxx handelt;
b) Durchführen einer Wärmebehandlung der ersten Aluminiumlegierung (11) zum Erhöhen der Duktilität der ersten Aluminiumlegierung (11);
c) Bereitstellen einer zweiten Aluminiumlegierung (12), wobei es sich bei der zweiten Aluminiumlegierung um eine Aluminiumlegierung der Klasse AA7xxx handelt;
d) Durchführen einer Wärmebehandlung der zweiten Aluminiumlegierung (12), wobei sich die Wärmebehandlung der ersten Aluminiumlegierung (11) von der Wärmebehandlung der zweiten Aluminiumlegierung (12) unterscheidet;
e) Zusammenschweißen der wärmebehandelten ersten Aluminiumlegierung (11) und der wärmebehandelten zweiten Aluminiumlegierung (12), um ein Verbundteil (10) zu erhalten; und
f) Umformen des Verbundteils (10) zu einem Kraftwagenbauteil (20), wobei das Kraftwagenbauteil (20) steife Bereiche und deformierbare Bereiche aufweist; und
g) Kathodische Tauchlackierung und/oder Lackierdurchlauf des Kraftwagenbauteils (20).

2. Verfahren nach Anspruch 1, **dadurch gekennzeichnet, dass** die chemische Zusammensetzung der zweiten Aluminiumlegierung sich hinsichtlich jeder ihrer Komponenten maximal um 0,5 Gew.% von der Zusammensetzung der ersten Aluminiumlegierung unterscheidet.

3. Verfahren nach Anspruch 1 oder 2, **dadurch gekennzeichnet, dass** es sich bei der ersten Aluminiumlegierung (11) und der zweiten Aluminiumlegierung (12) jeweils um eine Aluminiumlegierung handelt, die ausgewählt ist aus der Gruppe, bestehend aus den Legierungen der Klassen AA 7055, AA7081, AA 7181, AA 7085, AA 7185.

4. Verfahren nach Anspruch 2, **dadurch gekennzeichnet, dass** die erste Aluminiumlegierung (11) und die zweite Aluminiumlegierung (12) jeweils unabhängig voneinander die folgende chemische Zusammensetzung in Gew.% haben:
| | |
|---|---|
| Zn: | 6,9 - 8,4, insbesondere 6,9 - 7,8 |
| Mg: | 1,2 - 2,4, insbesondere 1,4 - 2,1 |
| Cu: | 1,3 - 2,6 |
| Mn: | < 0,3 |
| Cr oder Zr: | 0,05 - 0,25 |
| Si: | < 0,3, insbesondere 0,1 - 0,25 |
| Fe: | < 0,35, insbesondere 0,1 - 0,25 |
| Ti: | < 0,1 |
| andere Elemente: | jeweils < 0,05, insgesamt < 0,2 |
| Rest: | Aluminium |

5. Verfahren nach Anspruch 4, **dadurch gekennzeichnet, dass** die erste Aluminiumlegierung (11) und die zweite Aluminiumlegierung (12) jeweils 0,05 - 0,25 Gew.-%, insbesondere 0,07 - 0,18 Gew.-%, Zirkonium enthält.

6. Verfahren nach Anspruch 4 oder 5, **dadurch gekennzeichnet, dass** die erste Aluminiumlegierung (11) und die zweite Aluminiumlegierung (12) jeweils 1,4 - 1,8 Gew.-% Kupfer enthält.

7. Verfahren nach einem der vorhergehenden Ansprüche, wobei die Aluminiumlegierungen in Form von Blechen vorliegen und die bevorzugten Stärken der Bleche zwischen 0.5 und 3.5 mm liegen.

8. Verfahren nach einem der vorhergehenden Ansprüche, **dadurch gekennzeichnet, dass** das Zusammenschweißen der beiden Aluminiumlegierungen (11, 12) durch Rührreibschweißen oder Laserstrahlschweißen erfolgt.

9. Fahrzeugbauteil (20), herstellbar nach einem Verfahren gemäß irgendeinem der Ansprüche 1 bis 8, wobei das Fahrzeugbauteil (20) steife Bereiche und deformierbare Bereiche aufweist.

10. Fahrzeugbauteil (20) nach Anspruch 9, **dadurch gekennzeichnet, dass** es sich um eine B-Säule handelt.

11. Fahrzeugbauteil (20) nach Anspruch 9 oder 10, **dadurch gekennzeichnet, dass** der Bereich des Kraftwagenbauteils (20), welcher aus der ersten Aluminiumlegierung (11) besteht, als Solldeformationsbereich bei einer unfallbedingten Kraftbeaufschlagung ausgebildet ist.

## Claims

1. Method for manufacturing vehicle parts, in particular an automobile part (20), including the following steps:
a) providing a first aluminium alloy (11), which first aluminium alloy is an AA7xxx-type aluminium alloy;
b) performing a heat treatment of the first aluminium alloy (11) to improve the ductility of the first aluminium alloy (11);
c) providing a second aluminium alloy (12), which second aluminium alloy is an AA7xxx-type aluminium alloy;
d) performing a heat treatment of the second aluminium alloy (12), which heat treatment of the first aluminium (11) alloy differs from the heat treatment of the second aluminium alloy (12);
e) welding together the heat-treated first aluminium alloy (11) and the heat-treated second aluminium alloy (12), to create a composite part (10);
f) forming the composite part (10) into an automobile part (20), which automobile part (20) has stiff regions and deformable regions;
g) cathodic dip coating and/or coat-processing of the automobile part (20).

2. Method according to claim 1, **characterized in that** the chemical composition of the second aluminium alloy differs from that of the first aluminium alloy regarding each of its components by a maximum of 0.5 wt.%.

3. Method according to claim 1 or 2, **characterized in that** the first aluminium alloy (11) and the second aluminium alloy (12) are aluminium alloys, selected from the group of alloys, which cosists of the alloy types AA7055, AA7081, AA7181, AA7085, AA7185.

4. Method according to claim 2, **characterized in that** the first aluminium alloy (11) and the second aluminium alloy (12) independent from each other show the following chemical composition, in wt.%:
| | |
|---|---|
| Zn: | 6.9 - 8.4, in particular 6.9 - 7.8 |
| Mg: | 1.2 - 2.4, in particular 1.4 - 2.1 |
| Cu: | 1.3 - 2.6 |
| Mn: | < 0.3 |
| Cr or Zr: | 0.05 - 0.25 |
| Si: | < 0.3, in particular 0.1 - 0.25 |
| Fe: | < 0.35, in particular 0.1 - 0.25 |
| Ti: | < 0.1 |
| Other elements: | each < 0.05, in total < 0.2 |
| Balance: | Aluminium |

5. Method according to claim 5, **characterized in that** the first aluminium alloy (11) and the second aluminium alloy (12) each contain 0.05 - 0.25 wt.% , in particular 0.07 - 0.18 wt.%, zirconium.

6. Method according to claim 4 or 5, **characterized in that** the first aluminium alloy (11) and the second aluminium alloy (12) each contain 1.4 - 1.8 weight% copper.

7. Method according to one of the preceding claims, wherein the aluminium alloys are in form of sheets and the preferred sheet thickness is between 0.5 and 3.5mm.

8. Method according to one of the preceding claims, **characterized in that** the process of welding both aluminium alloys (11, 12) together is done by friction stir welding or laser beam welding.

9. Automobile part (20) manufactured by a method according to any one of claims 1 - 8, wherein the automobile part (20) has stiff regions and deformable regions.

10. Automobile part (20) according to claim 9, **characterized in that** the automobile part (20) is a B-pillar.

11. Automobile part (20) according to the claim 9 or 10, **characterized in that** the automobile part (20), which is made of the first aluminium alloy (11), is designed to have a region which is intended to deform in case of an accident-based force impact.

## Revendications

1. Procédé pour la fabrication d'un composant structurel de véhicule, en particulier d'un composant structurel pour véhicule automobile (20), incluant les étapes suivantes :
a) on prépare un premier alliage d'aluminium (11), ledit premier alliage d'aluminium étant un alliage d'aluminium de la classe AA7xxx ;
b) on exécute un traitement thermique du premier alliage d'aluminium (11) pour augmenter la ductilité du premier alliage d'aluminium (11) ;
c) on prépare un second alliage d'aluminium (12), ledit second alliage d'aluminium étant un alliage d'aluminium de la classe AA7xxx ;
d) on exécute un traitement thermique du second alliage d'aluminium (12), le traitement thermique du premier alliage d'aluminium (11) étant différent du traitement thermique du second alliage d'aluminium (12) ;
e) on soude ensemble le premier alliage d'aluminium (11) ayant subi un traitement thermique et le second alliage d'aluminium (12) ayant subi un traitement thermique, afin d'obtenir une pièce composite (10) ; et
f) on transforme la pièce composite (10) en un composant structurel pour véhicule automobile (20), ledit composant structurel pour véhicule automobile (20) comportant des zones rigides et des zones déformables ; et
g) on effectue une application de peinture par immersion cathodique ou par traversée du composant structurel pour véhicule automobile (20) dans une installation de peinture.

2. Procédé selon la revendication 1, **caractérisé en ce que** la composition chimique du second alliage d'aluminium dififère, pour ce qui concerne chacun de ses composants, au maximum à raison de 0,5 % en poids par rapport à la composition du premier alliage d'aluminium.

3. Procédé selon la revendication 1 ou 2, **caractérisé en ce que** le premier alliage d'aluminium (11) et le second alliage d'aluminium (12) sont chacun un alliage d'aluminium qui est sélectionné parmi le groupe constitué des alliages des classes AA 7055, AA 7081, AA 7181, AA 7085, AA 7185.

4. Procédé selon la revendication 2, **caractérisé en ce que** le premier alliage d'aluminium (11) et le second alliage d'aluminium (12) ont la composition chimique suivante, en pourcentage en poids, respectivement indépendamment l'un de l'autre :
| | |
|---|---|
| Zn | 6,9 à 8,4, en particulier 6,9 à 7,8 |
| Mg | 1,2 à 2,4, en particulier 1,4 à 2,1 |
| Cu : | 1,3 à 2,6 |
| Mn | < 0,3 |
| Cr ou Zr | 0,05 à 0,25 |
| Si | < 0,3, en particulier 0,1 à 0,25 |
| Fe | < 0,35, en particulier 0,1 à 0,25 |
| Ti | < 0,1 |
| d'autres éléments, respectivement < 0,05, et au total < 0,2 le reste étant de l'aluminium. | |

5. Procédé selon la revendication 4, **caractérisé en ce que** le premier alliage d'aluminium (11) et le second alliage d'aluminium (12) contiennent respectivement de 0,05 à 0,25 % en poids, en particulier 0,07 à 0,18 % en poids de zirconium.

6. Procédé selon la revendication 4 5, **caractérisé en ce que** le premier alliage d'aluminium (11) et le second alliage d'aluminium (12) contiennent respectivement 1,4 à 1,8 % en poids de cuivre.

7. Procédé selon l'une des revendications précédentes, dans lequel les alliages d'aluminium se présentent sous la forme de tôle et les épaisseurs préférées des tôles sont entre 0,5 et 3,5 mm.

8. Procédé selon l'une des revendications précédentes, **caractérisé en ce que** le soudage des deux alliages d'aluminium (11, 12) ensemble a lieu par soudage par agitation-friction ou par soudage au faisceau laser.

9. Composant structurel pour véhicule (20) susceptible d'être fabriqué selon un procédé d'après l'une quelconque des revendications 1 à 8, ledit composant structurel pour véhicule (20) comportant des zones rigides et des zones déformables.

10. Composant structurel pour véhicule (20) selon la revendication 9, **caractérisé en ce qu'**il s'agit d'un montant central ("montant B").

11. Composant structurel pour véhicule (20) selon la revendication 9 ou 10, **caractérisé en ce que** la région du composant structurel pour véhicule automobile (20) qui est formée avec le premier alliage d'aluminium (11) est réalisée à titre de zone de déformation de consigne lors de l'application de forces provoquées par un accident.
